# FASCICULE DE BREVET EUROPEEN

(11) **EP 0 808 686 B1**
(45) Date de publication et mention de la délivrance du brevet: **27.02.2002**
(21) Numéro de dépôt: 97400926.8
(22) Date de dépôt: 23.04.1997
(51) Int. Cl.: B23P 19/08, F16J 15/32

(54) **Dispositif d'emmanchement d'un joint d'étanchéité sur un arbre**
Vorrichtung zum Montieren einer Dichtung auf eine Welle
Press-fitting device for a seal on a shaft

(30) Priorité: 24.05.1996 FR 9606511
(43) Date de publication de la demande: 26.11.1997
(73) Titulaire: AUTOMOBILES PEUGEOT, 75116 Paris (FR); AUTOMOBILES CITROEN, 92200 Neuilly-sur-Seine (FR)
(72) Inventeur: Nardin, Jean-Claude, 25490 Fesches-le-Chatel (FR)
(74) Mandataire: Lanceplaine, Jean-Claude

(56) Documents cités:
- DE-B- 1 187 439
- DE-U- 1 959 008
- FR-A- 2 223 663
- US-A- 5 392 505
- PATENT ABSTRACTS OF JAPAN vol. 010, no. 122 (M-476), 7 Mai 1986 & JP 60 249537 A (TOSHIBA KK), 10 Décembre 1985,
- PATENT ABSTRACTS OF JAPAN vol. 008, no. 083 (M-290), 17 Avril 1984 & JP 59 001807 A (RIZUMU JIDOUSHIYA BUHIN SEIZOU KK), 7 Janvier 1984,

## Description

La présente invention a pour objet un dispositif d'emmanchement d'un joint d'étanchéité sur un arbre, suivant le préambule de la revendication 1.

Dans certaines applications industrielles, comme par exemple, les moteurs à combustion interne, des joints d'étanchéité sont emmanchés sur un arbre de façon à assurer l'étanchéité entre cet arbre et son support.

C'est le cas notamment des arbres à cames des culasses de moteur à combustion interne qui comportent à l'une de leurs extrémités un joint d'étanchéité emmanché dans un alésage ménagé dans la culasse.

Pour cela, le joint d'étanchéité est emmanché dans l'alésage à l'aide d'un outil d'emmanchement et un contrôle de son étanchéité est réalisé ultérieurement.

Jusqu'à présent, l'emmanchement du joint d'étanchéité est réalisé par une première broche et le contrôle de l'étanchéité est réalisé par une seconde broche après l'enlèvement de la première broche ce qui multiplie les opérations et le temps de montage.

L'invention a pour but d'éviter ces inconvénients en proposant un dispositif d'emmanchement d'un joint d'étanchéité sur un arbre effectuant en une seule opération le montage du joint et le contrôle de son étanchéité permettant ainsi de diminuer le nombre d'outils et le temps de montage.

L'invention a donc pour objet un dispositif d'emmanchement d'un joint d'étanchéité sur un arbre, comme par exemple un arbre à cames d'une culasse de moteur à combustion interne, caractérisé en ce qu'il comprend un outil comportant des moyens de centrage sur un cône intérieur ménagé dans l'arbre, des moyens de support du joint d'étanchéité, des moyens d'emmanchement du joint d'étanchéité dans un alésage autour de l'arbre et des moyens de contrôle de l'étanchéité dudit joint après son emmanchement dans ledit alésage formés, d'une part par un conduit ménagé dans les moyens d'emmanchement et relié à des moyens d'alimentation en fluide sous pression et, d'autre part, par un espace annulaire ménagé entre le coulisseau et la broche, ledit espace annulaire étant relié audit conduit et débouchant dans le logement du joint d'étanchéité à emmancher.

Selon d'autres caractéristiques de l'invention :
- les moyens de centrage comprennent un pion coopérant avec un cône intérieur ménagé dans l'arbre et un coulisseau concentrique audit pion et ménageant avec celui-ci une chambre de réception de l'extrémité dudit arbre, ledit pion et ledit coulisseau étant déplaçables en translation l'un par rapport à l'autre sous l'action d'un poussoir relié à un organe d'actionnement,
- le pion est relié par l'une des ses extrémités au coulisseau au moyen d'un premier organe élastique et le coulisseau est relié par l'une de ses extrémités au poussoir au moyen d'un second organe élastique, la force du premier organe élastique étant inférieure à la force du second organe élastique,
- les organes élastiques sont formés chacun par un ressort,
- les moyens de support du joint d'étanchéité sont formés par un logement ménagé entre l'extrémité libre du coulisseau et un bord d'une jupe concentrique et déplaçable en translation par rapport audit coulisseau,
- les moyens d'emmanchement comprennent une broche concentrique au coulisseau et disposée entre ledit coulisseau et ladite jupe, ladite broche étant solidaire par l'une de ses extrémités du poussoir et portant à son autre extrémité un nez de poussée débouchant dans le logement dudit joint d'étanchéité,
- un joint d'étanchéité est interposé entre la broche et le poussoir,
- la jupe comporte sur sa face interne un ergot de guidage coopérant avec une lumière longitudinale ménagée sur la face externe de la broche,
- la jupe est reliée à la broche par un organe élastique formée par un ressort,
- le nez de poussée est formé par une bague comportant une portion principale tubulaire munie d'une collerette de liaison avec la broche,
- le nez de poussée porte une cale de réglage de la profondeur d'emmanchement du joint d'étanchéité,
- un joint d'étanchéité est interposé entre la portion principale tubulaire du nez de poussée et un épaulement formé à l'extrémité libre de la broche.

D'autres caractéristiques et avantages de l'invention apparaîtront au cours de la description qui va suivre, donnée uniquement à titre d'exemple et faite en référence aux dessins annexés sur lesquels :
- la Fig. 1 est une vue schématique en coupe longitudinale d'un dispositif d'emmanchement conforme à l'invention,
- la Fig. 2 est une vue de détails et à plus grande échelle montrant le positionnement du joint d'étanchéité dans le dispositif d'emmanchement conforme à l'invention,
- la Fig. 3 est une vue schématique en coupe longitudinale montrant le fonctionnement du dispositif d'emmanchement conforme à l'invention.

Sur les figures, on a représenté schématiquement un dispositif d'emmanchement d'un joint d'étanchéité 1 sur un arbre 2 monté dans un support 3.

A titre d'exemple, l'arbre 2 est formé par un arbre à cames et le support 3 est formé par une culasse qui comporte un alésage 4 destiné à recevoir le joint d'étanchéité 1.

Le dispositif d'emmanchement selon l'invention comprend un outil désigné dans son ensemble par la référence 10 et qui comporte :
- des moyens de centrage sur l'extrémité de l'arbre 2,
- des moyens de support du joint d'étanchéité 1,
- des moyens d'emmanchement du joint d'étanchéité 1 dans l'alésage 4,
- et des moyens de contrôle de l'étanchéité du joint 1 après son emmanchement dans ledit alésage 4.

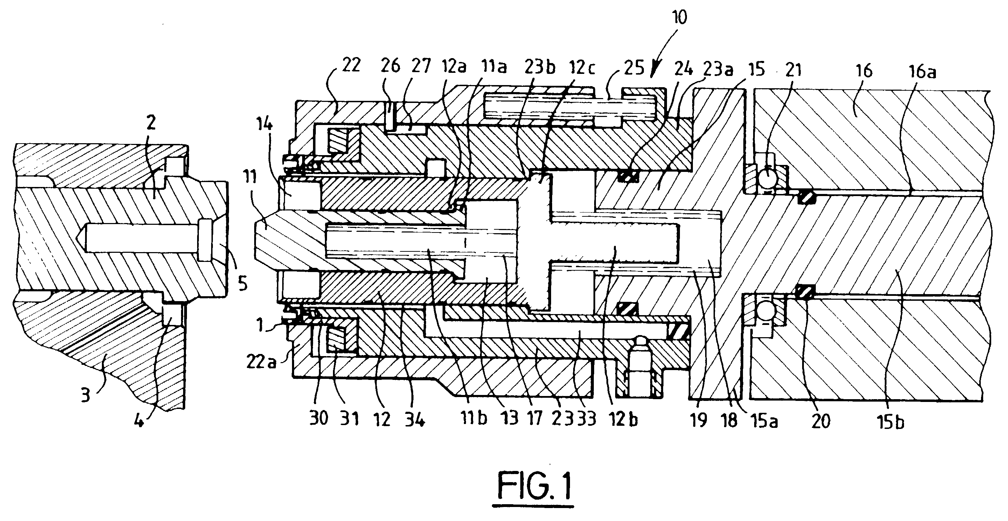

Ainsi que représenté sur la Fig.1, les moyens de centrage de l'outil 10 sur l'extrémité de l'arbre 2 comprennent un pion 11 qui, en position repos, est en saillie par rapport à l'extrémité de l'outil 10.

Ce pion 11 est destiné à coopérer avec un cône intérieur 5 ménagé dans l'arbre 2.

Les moyens de centrage de l'outil 10 comprennent également un coulisseau 12 comportant un alésage 13 dans lequel est monté coulissant le pion 11.

Ce pion 11 est maintenu dans le coulisseau 12 par l'intermédiaire d'un épaulement 11a disposé à l'extrémité du pion 11 opposée à celle destinée à coopérer avec le cône 5 de l'arbre 2 et par l'intermédiaire d'un rebord 12a ménagé dans l'alésage 13 du coulisseau 12.

Le coulisseau 12 est concentrique au pion 11 et ménage avec celui-ci une chambre 14 de réception de l'extrémité de l'arbre 2 au moment de l'emmanchement du joint 1 dans l'alésage 4.

Le pion 11 et le coulisseau 12 sont déplaçables en translation l'un par rapport à l'autre sous l'action d'un poussoir 15 relié à un organe d'actionnement 16 constitué par exemple par un vérin olépneumatique.

Le pion 11 est relié au coulisseau 12 au moyen d'un premier organe élastique 17 comme par exemple un ressort, qui est interposé entre le fond d'un alésage 11b ménagé dans ledit pion 11 et le fond de l'alésage 13 du coulisseau 12.

Ce coulisseau 12 comporte à sa partie arrière une tige 12b qui coulisse dans un canon 18 formé dans le poussoir 15.

Ce coulisseau 12 est relié au poussoir 15 par un second organe élastique 19, comme par exemple un ressort, qui est interposé entre un épaulement 12c prévu sur ledit coulisseau 12 et le fond du canon 18 du poussoir 15.

Cet organe élastique 19 est disposé autour de la tige 12b du coulisseau 12.

Le force du premier organe élastique 17 est inférieure à la force du second organe élastique 19.

Le poussoir 15 comporte, sensiblement dans sa partie médiane, un épaulement 15a et à sa partie arrière une tige 15b qui est engagée dans un canon 16a ménagé dans l'organe d'actionnement 16 de façon à assurer un accouplement entre ledit poussoir 15 et ledit organe d'actionnement 16.

Des joints toriques 20 sont placés entre la tige 15b du poussoir 15 et le canon 16a de l'organe d'actionnement 16 pour assurer un recentrage de ces deux éléments l'un par rapport à l'autre.

Une butée à billes 21 assure un déplacement sans glissement de l'organe d'actionnement 16 sur la tige 15b du poussoir 15.

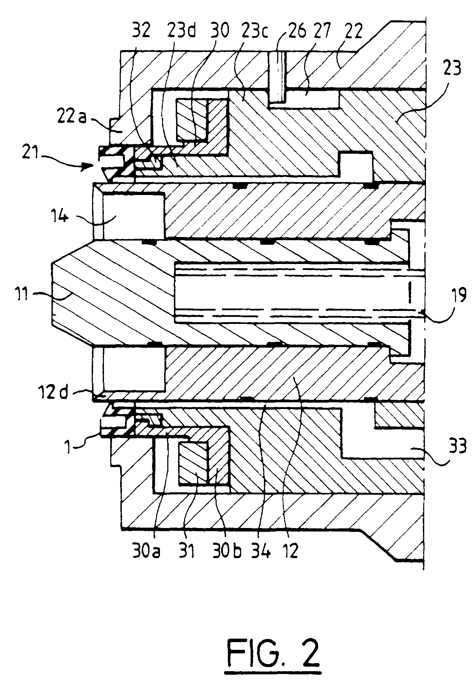

Ainsi que représenté plus en détails sur la figure 2, les moyens de support du joint d'étanchéité 1 sont formés par un logement 21 ménagé entre l'extrémité libre 12d du coulisseau 12 et un bord 22a d'une jupe 22 concentrique et déplaçable en translation par rapport audit coulisseau 12.

Les moyens d'emmanchement du joint d'étanchéité 1 dans l'alésage 4 comprennent une broche 23 concentrique au coulisseau 12 et disposée entre ledit coulisseau 12 et la jupe 22.

La broche 23 est solidaire par l'une 23a de ses extrémités du poussoir 15 par exemple par l'intermédiaire de vis, non représentées, qui traversent l'épaulement 15a du poussoir 15.

Comme représenté à la Fig. 1, le coulisseau 12 est, en position repos, en appui sur un rebord 23b ménagé à l'intérieur de la broche 23 et cela grâce à la force engendrée par l'organe élastique 19.

Un joint d'étanchéité 24 est interposé entre la broche 23 et le poussoir 15.

La broche 23 et la jupe 22 sont déplaçables en translation l'une par rapport à l'autre et ladite jupe 22 est reliée à ladite broche 23 par au moins un organe élastique 25 constituée par un ressort.

La jupe 22 comporte sur sa face interne un ergot de guidage 26 coopérant avec une lumière 27 longitudinale ménagée sur la face externe de la broche 23.

Ainsi que représenté plus en détails à la Fig. 2, cette broche 23 porte à son extrémité 23c opposée à celle 23a reliée au poussoir 15, un nez de poussée 30 débouchant dans le logement 21 du joint d'étanchéité 1.

Le nez de poussée 30 est formé par une bague comportant une portion principale tubulaire 30a munie d'une collerette 30b de liaison avec la broche 23.

Par ailleurs, le nez de poussée 30 porte une cale 31 de réglage de la profondeur d'emmanchement du joint d'étanchéité 1, comme on le verra ultérieurement.

Un joint d'étanchéité 32 est interposé entre la portion principale tubulaire 30a du nez de poussée 30 et un épaulement 23d formé à l'extrémité libre 23c de la broche 23.

Les moyens de contrôle de l'étanchéité du joint 1 après son emmanchement dans l'alésage 4 sont formés, d'une part, par un conduit 33 ménagé dans la broche 23 et relié à des moyens d'alimentation en fluide sous pression, non représentés, et, d'autre part, par un espace annulaire 34 ménagé entre le coulisseau 12 et la broche 23.

Cet espace annulaire 34 est relié au conduit 33 et débouche dans le logement 21 du joint d'étanchéité 1 à emmancher.

D'autre part, cet espace annulaire 34 communique également avec la chambre interne de la broche 23 dans laquelle se déplace le coulisseau 12.

La mise en place du joint d'étanchéité 1 dans l'alésage 4 est réalisé de la façon suivante.

Tout d'abord, le joint d'étanchéité 1 est mis en place manuellement ou mécaniquement, sur l'extrémité de l'outil 10, c'est à dire dans le logement 21.

Ainsi, le joint d'étanchéité 1 est serré et centré entre le bord 22a de la jupe 22 et le coulisseau 12, en appui sur le nez de poussée 30.

Ensuite, l'outil 10 se déplace poussé par l'organe d'actionnement 16.

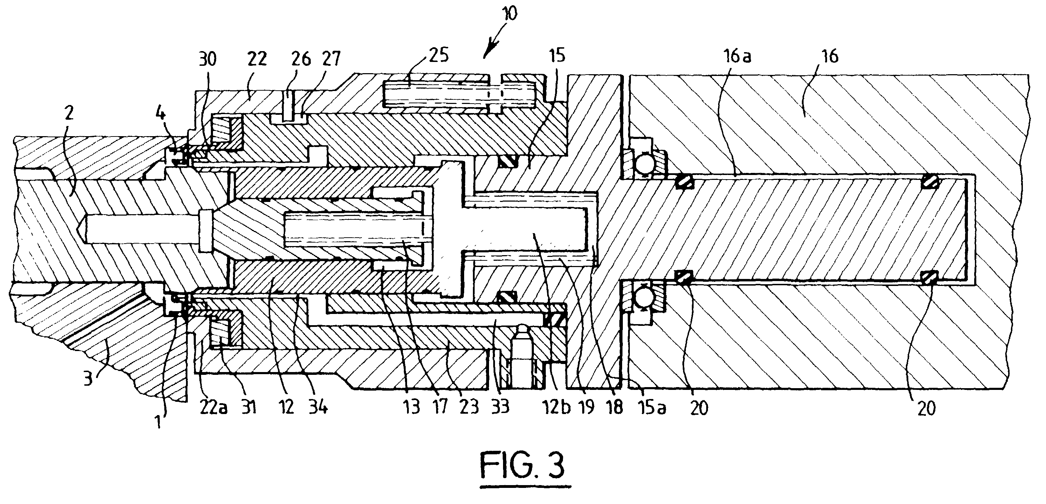

Ainsi que représenté à la Fig. 3, le pion 11 se centre dans le cône intérieur 5 de l'arbre 2 et recule dans le coulisseau 12, tandis que l'extrémité de l'arbre 2 s'engage progressivement dans la chambre de réception 14, jusqu'à venir en butée sur le chanfrein de celle-ci.

Après l'engagement de l'extrémité de l'arbre 2 dans la chambre de réception 14, le coulisseau 12 se déplace dans la broche 23, à l'encontre de la force de l'organe élastique 19.

Ensuite, toujours sous l'action de l'organe d'actionnement 16, la broche 23 se déplace en translation et le nez de poussée 30, en appui sur le joint d'étanchéité 1, pousse ce joint d'étanchéité 1 en direction du fond de l'alésage 4.

Lors du déplacement de la broche 23 par rapport à la jupe 22, ladite broche 23 est guidée par l'ergot 26 et la rainure 27.

La fin de l'emmanchement du joint d'étanchéité 1 dans l'alésage 4 est réalisé lorsque la jupe 22 est au contact du support 3 par l'intermédiaire de son bord 22a.

Le réglage de la course d'emmanchement du joint d'étanchéité 1 dans l'alésage 4 est obtenu par la cale d'épaisseur 31 dont la dimension est choisie en fonction des côtes à respecter.

A la fin de l'emmanchement du joint d'étanchéité 1, le joint 32 est en appui sur ce joint d'étanchéité 1 de façon à assurer l'étanchéité de toute la partie interne de l'outil 10.

Après l'emmanchement du joint d'étanchéité 1 dans l'alésage 4, on effectue le contrôle de l'étanchéité de ce joint 1.

Pour cela, de l'air filtré sous pression est envoyé dans le conduit 33 afin de remplir toute la partie interne de l'outil 10 qui constitue une chambre fermée, grâce aux différents joints d'étanchéité.

Lorsque cette chambre est remplie et après un temps de stabilisation du système, un capteur différentiel, non représenté, placé en amont du conduit 33, vérifie la pression interne.

Si la chute de pression enregistrée est supérieure à une chute nominale, cela signifie que le joint d'étanchéité 1 n'assure pas l'étanchéité entre l'arbre 2 et son support 3.

Le dispositif selon l'invention s'applique à l'emmanchement de tout joint d'étanchéité dont la différence entre le diamètre interne et le diamètre externe permet la juxtaposition mécanique d'un joint d'étanchéité, comme par exemple le joint d'étanchéité 32 et d'un nez de poussée permettant d'emmancher ce joint d'étanchéité.

Le dispositif d'emmanchement selon l'invention présente l'avantage de pouvoir réaliser en une seule opération le montage d'un joint et le contrôle de son étanchéité et de ce fait de diminuer le nombre d'outils et le temps de montage.

## Revendications

1. Dispositif d'emmanchement d'un joint d'étanchéité (1) sur un arbre (2), comme par exemple un arbre à cames d'une culasse de moteur à combustion interne, **caractérisé en ce qu'**il comprend un outil (10) comportant des moyens (11) de centrage sur un cône intérieur (5) ménagé dans l'arbre (2), des moyens (12, 22) de support du joint d'étanchéité (1), des moyens (23, 30) d'emmanchement du joint d'étanchéité (1) dans un alésage (4) autour de l'arbre (2) et des moyens (33, 34) de contrôle de l'étanchéité dudit joint (1) après son emmanchement dans ledit alésage (4) formés, d'une part, par un conduit (33) ménagé dans les moyens d'emmanchement et relié à des moyens d'alimentation en fluide sous pression et, d'autre part, par un espace annulaire (34) ménagé entre le coulisseau (12) et la broche (23), ledit espace annulaire (34) étant relié audit conduit (33) et débouchant dans le logement (21) du joint d'étanchéité (1) à emmancher.

2. Dispositif selon la revendication 1, **caractérisé en ce que** les moyens de centrage comprennent un pion (11) coopérant avec ledit cône intérieur (5) et un coulisseau (12) concentrique audit pion (11) et ménageant avec celui-ci une chambre de réception (14) de l'extrémité dudit arbre (2), ledit pion (11) et ledit coulisseau (12) étant déplaçables en translation l'un par rapport à l'autre sous l'action d'un poussoir (15) relié à un organe d'actionnement (16).

3. Dispositif selon la revendication 2, **caractérisé en ce que** le pion (11) est relié par l'une de ses extrémités au coulisseau (12) au moyen d'un premier organe élastique (17) et le coulisseau (12) est relié par l'une de ses extrémités au poussoir (15) au moyen d'un second organe élastique (19), la force du premier organe élastique (17) étant inférieure à la force du second organe élastique (19).

4. Dispositif selon la revendication 3, **caractérisé en ce que** les organes élastiques (17, 19) sont formés chacun par un ressort.

5. Dispositif selon l'une quelconque des revendications 1 à 3, **caractérisé en ce que** les moyens de support du joint d'étanchéité (1) sont formés par un logement (21) ménagé entre l'extrémité libre du coulisseau (12) et un bord (22a) d'une jupe (22) concentrique et déplaçable en translation par rapport audit coulisseau (12).

6. Dispositif selon l'une quelconque des revendications précédentes, **caractérisé en ce que** les moyens d'emmanchement comprennent une broche (23) disposée entre ledit coulisseau (12) et ladite jupe (22), ladite broche (23) étant solidaire par l'une de ses extrémités du poussoir (15) et portant à son autre extrémité un nez de poussée (30) débouchant dans le logement (21) dudit joint d'étanchéité (1).

7. Dispositif selon la revendication 6, **caractérisé en ce qu'**un joint d'étanchéité (24) est interposé entre la broche (23) et le poussoir (15).

8. Dispositif selon les revendications 5 et 6, **caractérisé en ce que** la jupe (22) comporte sur sa face interne un ergot de guidage (26) coopérant avec une lumière longitudinale (27) ménagée sur la face externe de la broche (23).

9. Dispositif selon les revendications 5 et 6, **caractérisé en ce que** la jupe (22) est reliée à la broche (23) par au moins un organe élastique (25) formé par un ressort.

10. Dispositif selon la revendication 6, **caractérisé en ce que** le nez de poussée (30) est formé par une bague comportant une portion principale tubulaire (30a) munie d'une collerette (30b) de liaison avec la broche (23).

11. Dispositif selon la revendication 6, **caractérisé en ce que** le nez de poussée (30) porte une cale (31) de réglage de la profondeur d'emmanchement du joint d'étanchéité (1).

12. Dispositif selon les revendications 6 et 10, **caractérisé en ce qu'**un joint d'étanchéité (32) est interposé entre la portion principale tubulaire (30a) du nez de poussée (30) et un épaulement (23d) formé à l'extrémité libre de la broche (23).

## Claims

1. Device for fitting a gasket (1) onto a shaft (2), such as e.g. a camshaft of a cylinder head of an internal combustion engine, **characterized in that** it comprises a tool (10) incorporating means (11) for centring on an internal cone (5) made in the shaft (2), means (12, 22) for supporting the gasket (1), means (23, 30) for fitting the gasket (1) in a bore (4) around the shaft (2) and means (33, 34) for checking the seal of said gasket (1), following its fitting into said bore (4) and formed on the one hand by a duct (33) made in the fitting means and connected to pressurized fluid supply means and on the other hand by an annular space (34) made between the slide (12) and the spindle (23), said annular space (34) being connected to said duct (33) and issuing into the recess (21) of the gasket (1) to be fitted.

2. Device according to claim 1, **characterized in that** the centring means comprise a pin (11) cooperating with said internal cone (5) and a slide (12) concentric to said pin (11) and providing with the latter a reception chamber (14) for the end of said shaft (2), said pin (11) and said slide (12) being displaceable in translation relative to one another under the action of a push rod (15) connected to an actuating member (16).

3. Device according to claim 2, **characterized in that** the pin (11) is connected by one of its ends to the slide (12) by means of a first elastic member (17) and the slide (12) is connected by one of its ends to the push rod (15) by means of a second elastic member (19), the force of the first elastic member (17) being less than the force of the second elastic member (19).

4. Device according to claim 3, **characterized in that** the elastic members (17, 19) are each formed by a spring.

5. Device according to any one of the claims 1 to 3, **characterized in that** the support means of the gasket (1) are formed by a recess (21) provided between the free end of the slide (12) and an edge (22a) of a skirt (22) concentric and displaceable in translation relative to said slide (12).

6. Device according to any one of the preceding claims, **characterized in that** the fitting means comprise a spindle (23) located between said slide (12) and said skirt (22), said spindle (23) being integral by one of its ends with the push rod (15) and carrying at its other end a thrust nose (30) issuing into the recess (21) of said gasket (1).

7. Device according to claim 6, **characterized in that** a gasket (24) is placed between the spindle (23) and the push rod (15).

8. Device according to claims 5 and 6, **characterized in that** the skirt (22) has on its internal face a guide lug (26) cooperating with a longitudinal opening (27) provided on the outer face of the spindle (23).

9. Device according to claims 5 and 6, **characterized in that** the skirt (22) is connected to the spindle (23) by at least one elastic member (25) formed by a spring.

10. Device according to claim 6, **characterized in that** the thrust nose (30) is formed by a collar having a main, tubular portion (30a) equipped with a flange (30b) for connecting to the spindle (23).

11. Device according to claim 6, **characterized in that** the thrust nose (30) carries a shim (31) for regulating the fitting depth of the gasket (1).

12. Device according to claims 6 and 10, **characterized in that** a gasket (32) is placed between the main, tubular portion (30a) of the thrust nose (30) and a shoulder (23d) formed at the free end of the spindle (23).

## Patentansprüche

1. Vorrichtung zum Aufdrücken einer Dichtung (1) auf eine Welle (2), beispielsweise eine Nockenwelle eines Zylinderkopfes einer Brennkraftmaschine, **dadurch gekennzeichnet, daß** sie ein Werkzeug (10) aufweist, mit Mitteln (11) zur Zentrierung auf einen Innenkonus (5), der in der Welle (2) ausgebildet ist, Mitteln (12, 22) zur Abstützung der Dichtung (1), Mitteln (23, 30) zum Eindrücken der Dichtung (1) in eine Ausnehmung (4), die die Welle (2) umgibt, und Mitteln (33, 34) zur Kontrolle der Dichtheit der Dichtung (1) nach ihrem Eindrücken in die genannte Ausnehmung (4), die gebildet werden einerseits durch eine Leitung (33), die in den Aufdrückmitteln ausgebildet und mit einer Einrichtung zur Zufuhr von Druckfluid verbunden ist, und andererseits durch einen Ringraum (34), der zwischen dem Stößel (12) und dem Dorn (23) ausgebildet ist, wobei dieser Ringraum (34) mit der Leitung (33) verbunden ist und in die Aufnahme (21) für die aufzudrückende Dichtung (1) mündet.

2. Vorrichtung nach Anspruch 1, **dadurch gekennzeichnet, daß** die Zentriermittel einen mit dem genannten Innenkonus (5) zusammenwirkenden Stift (11) und einen zu dem Stift (11) konzentrischen Stößel (12) umfassen, der mit diesem eine Kammer (14) zur Aufnahme des Endes der Welle (2) bildet, wobei der Stift (11) und der Stößel (12) unter der Wirkung eines Ausstoßers (15), der mit einem Betätigungsorgan (16) verbunden ist, relativ zueinander translationsbeweglich sind.

3. Vorrichtung nach Anspruch 2, **dadurch gekennzeichnet, daß** der Stift (11) mit einem seiner Enden mit Hilfe eines ersten elastischen Organs (17) mit dem Stößel (12) verbunden ist und der Stößel (12) mit einem seiner Enden mit Hilfe eines zweiten elastischen Organs (19) mit dem Ausstoßer (15) verbunden ist, wobei die Kraft des ersten elastischen Organs (17) kleiner ist als diejenige des zweiten elastischen Organs (19).

4. Vorrichtung nach Anspruch 3, **dadurch gekennzeichnet, daß** die elastischen Organe (17, 19) jeweils durch eine Feder gebildet werden.

5. Vorrichtung nach einem der Ansprüche 1 bis 3, **dadurch gekennzeichnet, daß** die Abstützmittel für die Dichtung (1) gebildet werden durch eine Aufnahme (21), die zwischen dem freien Ende des Stößels (12) und einem Rand (22a) einer zu dem Stößel (12) konzentrischen und relativ dazu translationsbeweglichen Hülse (22) gebildet ist.

6. Vorrichtung nach einem der vorstehenden Ansprüche, **dadurch gekennzeichnet, daß** die Aufdrückmittel einen Dorn (23) umfassen, der zwischen dem genannten Stößel (12) und der genannten Hülse (22) angeordnet ist, wobei der Dorn (23) mit einem seiner Enden mit dem Ausstoßer (15) verbunden ist und an seinem anderen Ende eine Ausstoßnase (30) trägt, die in die Aufnahme (21) für die Dichtung (1) ausläuft.

7. Vorrichtung nach Anspruch 6, **dadurch gekennzeichnet, daß** eine Dichtung (24) zwischen dem Dorn (23) und dem Ausstoßer (15) eingefügt ist.

8. Vorrichtung nach den Ansprüchen 5 und 6, **dadurch gekennzeichnet, daß** die Hülse (22) an ihrer Innenfläche einen Führungsvorsprung (26) aufweist, der mit einer Längsöffnung (27) zusammenwirkt, die in der Außenfläche des Dorns (23) ausgebildet ist.

9. Vorrichtung nach den Ansprüchen 5 und 6, **dadurch gekennzeichnet, daß** die Hülse (22) mit dem Dorn (23) durch ein elastisches Organ (25) verbunden ist, das durch eine Feder gebildet wird.

10. Vorrichtung nach Anspruch 6, **dadurch gekennzeichnet, daß** die Ausstoßnase (30) durch einen Ring gebildet wird, der einen rohrförmigen Hauptteil (30a) aufweist, der mit einem Kragen (30b) zur Verbindung mit dem Dorn (23) versehen ist.

11. Vorrichtung nach Anspruch 6, **dadurch gekennzeichnet, daß** die Ausstoßnase (30) einen Keil (31) zur Einstellung der Aufdrücktiefe der Dichtung (1) trägt.

12. Vorrichtung nach den Ansprüchen 6 und 10, **dadurch gekennzeichnet, daß** eine Dichtung (32) zwischen dem rohrförmigen Hauptteil (30a) der Ausstoßnase (30) und einer am freien Ende des Dorns (23) gebildeten Schulter (23d) eingefügt ist.
